# EUROPEAN PATENT SPECIFICATION

(11) **EP 1 778 904 B1**
(45) Date of publication and mention of the grant of the patent: **01.10.2008**
(21) Application number: 05782419.5
(22) Date of filing: 08.08.2005
(51) Int. Cl.: D02G 3/44, F03G 7/00

(54) **A FIBRE OR FILAMENT**
FASER ODER FADEN
FIBRE OU FILAMENT

(30) Priority: 14.08.2004 GB 0418201
(43) Date of publication of application: 02.05.2007
(73) Proprietor: Koninklijke Philips Electronics N.V., 5621 BA Eindhoven (NL)
(72) Inventor: KRANS, Jan M., c/o Philips IProperty &Standards, Redhill Surrey RH1 5HA (GB); WILDERBEEK, Johannes T. A., Philips IP & Standards, Redhill Surrey RH1 5HA (GB); DEN TOONDER, Jacob M. J., Philips IP & Standards, Redhill Surrey RH1 5HA (GB); VAN BRUGGEN, Michel P. B., Philips IP & Standards, Redhill Surrey RH1 5HA (GB)
(74) Representative: Bekkers, Joost J.J
(86) International application number: PCT/IB2005/052632
(87) International publication number: WO 2006/018785

(56) References cited:
- US-A- 5 019 467
- US-A- 5 250 167
- US-A- 6 117 296
- US-A1- 2004 143 160

## Description

This invention relates to a fibre or filament, especially one that is suitable for inclusion in a fabric or garment with the aim of producing a garment with tactile feedback. The invention particularly relates to fibres or filaments comprising a dry material. By forming the fibre or filament from a dry material, it is not necessary to encapsulate the fibre or filament to prevent evaporation of the material.

Various types of fibre which can be tuned in length are known.

It is known to form a fibre from a shaped memory (SM) alloy or a SM polymer. Such a fibre can be tuned in length by varying the temperature of the fibre.

Another known fibre comprises a liquid single crystal elastomer (LSCE), the length of which may be tuned by varying the temperature of the fibre.

Yet another known fibre is formed from electronic electroactive polymers (EAPs). Such fibres can be tuned in length by varying the electric field across the fibre. Fibres formed from electroactive polymers have been used to form electrostrictive and electrostatically stricted polymer actuator fibres.

Finally, fibres formed from ionic electroactive polymers have been proposed.

Problems with existing fibres of the type described hereinabove, relate to the nature of the stimulus required to induce a change in the length of the fibre. For fibres formed from shaped memory materials or liquid single crystal elastomers, the stimulus is a temperature change. Fibres forming electrostrictive polymer actuators on the other hand, require a stimulus in the form of a voltage that is much too large to be applied if the fibre is used to form a textile or fabric to be worn by a person. For example, an electrical field of 50-100 V/micron is required in such systems to obtain a strain (i.e. a deformation) of 1%.

A problem with fibres formed from ionic electroactive polymers is that such fibres are formed from a liquid like medium. Such systems need to be protected against evaporation. An additional problem of these systems is that because they are fluid-like, that they cannot be permanently shaped. US 6,117,296 discloses the use of an ionic polymer hydrogel.

It is an object of the present invention to provide a fibre or filament in which a dimension of the fibre can be controllably varied.

According to a first aspect of the present invention there is provided a fibre or filament comprising: a solid-state electrolyte; and first and second electrodes spaced apart from one another.

By forming the fibre or filament from a solid-state electrolyte, the fibre is a substantially fully dry fibre. This means that the material forming the fibre contains very little liquid. This in turn means that the material is unlikely to flow under its own weight.

Advantageously, the fibre or filament is substantially cylindrical in shape and comprises an axis extending longitudinally along the fibre.

Preferably, the solid-state electrolyte comprises a solvent free solid-state electrolyte.

Conveniently, the solid-state electrolyte comprises a polyethylene oxide/polyethylene glycol (PEO - PEG) system.

The polyethylene oxide/polyethylene glycol system preferable comprises a casted solution of linear polyethylene oxide (PEO), polyethylene glycol (PEG) which acts as a plasticizer, and a salt preferably in the form of lithium perchlorate.

Alternatively the salt comprises one or more of: lithium, sodium potassium, copper and tetrabuthylammonium salts of polymer electrolytes and other types of (poly)electrolytes.

When an electrical potential difference is applied across the first and second electrodes, it is believed that a motion is induced in the cations and anions in the PEO-PEG system which is in the form of a matrix. As the cations have an adhesive interaction with the matrix, the cation transport produces a pressure gradient in the fibre or filament which causes a change in the length of the fibre or filament.

Advantageously, the fibre or filament further comprises voltage means for applying an electrical potential difference between the first and second electrodes. Preferably, the voltage means comprises one or more batteries.

Conveniently, the voltage means comprises a first voltage source for applying a relatively high electrical potential to the first electrode and a second voltage source for applying a relatively low electrical potential to the second electrode.

Preferably, the electrical potential difference applied across the fibre is of the order of a few volts, and the thickness of the fibre or filament is smaller than 1 mm, preferably between 100-500 microns.

Preferably, each of the first and second electrodes extend substantially longitudinally along the fibre, and thus the length of the fibre may be controllably varied by applying an electrical potential difference between the two electrodes.

Advantageously, the first electrode extends substantially along the axis of the fibre. The first electrode is therefore contained substantially centrally within the fibre.

Alternatively, the first electrode extends along or close to an outer surface of the fibre or filament.

When the fibre or filament is substantially cylindrical in shape, the first electrode may extend along a portion of the fibre or filament that is spaced apart from the axis of the fibre or filament.

The first electrode may extend substantially helically along, or close to the outer surface of the fibre or filament.

Preferably, the second electrode extends along, or close to an outer surface of the filament. When the fibre or filament is substantially cylindrically shaped, the second electrode extends through a portion of the fibre that is spaced apart from the axis of the fibre.

Preferably, the second electrode extends substantially helically along, or close to the outer surface of the fibre.

According to a second aspect of the present invention there is provided a method of causing changes in a dimension of a fibre or filament, the fibre or filament comprising a solid state electrolyte, and further comprising first and second electrodes spaced apart from one another and extending substantially longitudinally along the fibre, the method comprising:
applying an electrical potential difference between the first and second electrodes.

Preferably the step of applying an electrical potential difference between the first and second electrodes comprises applying a relatively high electrical potential to the first electrode, and a relatively low electrical potential to the second electrode.

The invention is also directed towards a method of manufacturing a fibre or filament, a garment formed from a plurality of fibres or filaments, and a textile formed from a plurality of fibres or filaments. The garment or fabric could be woven or knitted, and the fibres or filaments can be attached to the garment or fabric by sewing or embroidery.

The invention will now be further described by way of example only with reference to the accompanying drawings in which:
Figures 1a and 1b are schematic representations of a first embodiment of the present invention;
Figures 2a and 2b are schematic representations of a second embodiment of the present invention; and
Figure 3 is a schematic representation of a fibre or filament according to the present invention showing movement of the anions and cations within the fibre or filament.

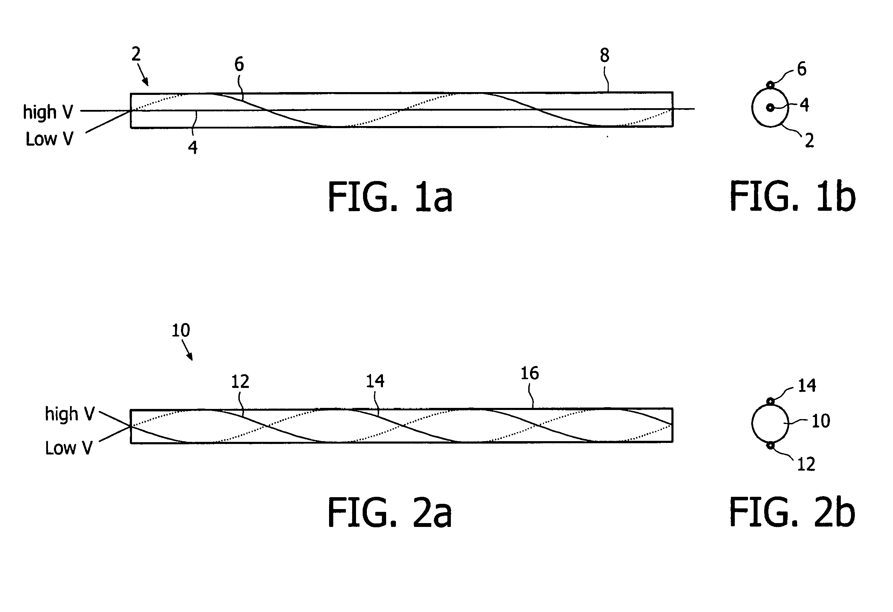

Referring to Figures 1a and 1b, a fibre according to the present invention is designated generally by the reference numeral 2. The fibre 2 is formed from a solid-state electrolyte such as a polyethylene oxide/polyethylene glycol system in the form of a matrix and further comprises a first electrode 4 and a second electrode 6. The first electrode extends substantially along the axis of the fibre 2 is therefore positioned substantially centrally within the fibre 2. The second electrode is positioned at or close to an outer surface 8 of the fibre and extends helically around the fibre.

By applying an electrical potential difference between the first electrode 4 and the second electrode 6 the fibre will spiral. This results in a contraction in the longitudinal direction of the fibre.

Preferably, a relatively high electrical potential is applied to the first electrode and a relatively low electrical potential is applied to the second electrode. It is believed that the electrical potential difference applied between the first electrode 4 and the second electrode 6 induces motion of cations and anions contained in the PEO-PEG matrix. In other words, the cations will migrate towards the negative voltage which in this example is applied to the second electrode 6. As the cations have an adhesive interaction within the matrix, the cation transport produces a pressure gradient in the fibre which causes the fibre to bend.

In the embodiment of the invention shown in Figure 1, the bending of the fibre will essentially follow the position of the second electrode 6 and will thus result in the fibre 2 spiralling or coiling and thus contracting in the longitudinal direction along the length of the fibre.

Turning now to Figures 2a and 2b, a second embodiment of the invention is shown comprising a fibre 10. The fibre 10 is formed from a solid-state electrolyte such as a PEO-PEG system in the form of a matrix. The fibre 10 further comprises first electrode 12 and second electrode 14. In this embodiment it can be seen that not only does the second electrode 10 extend helically at or close to an outer surface 16 on the fibre 10, but so does the first electrode 12. The first and second electrodes 12, 14 are arranged to be positioned substantially diametrically opposite to one another along the length of the fibre. By applying an electrical potential difference between the electrodes 12, 14, the fibre will spiral or twist, thereby displaying a net shrinkage in the axial direction.

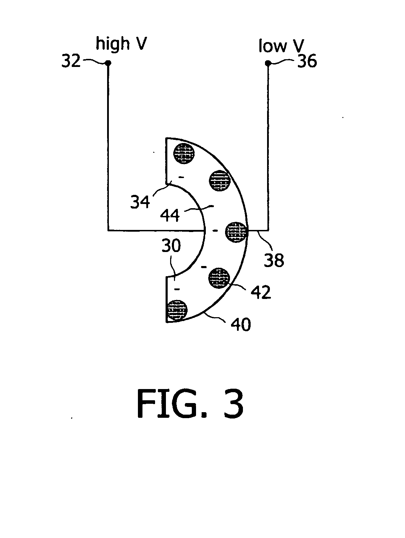

Turning now to Figure 3, a fibre or filament according to the present invention is designated generally by the reference numeral 30. An electrical potential difference is applied across the fibre 30 so that there is a relatively high electrical potential 32 supplied to the first electrode 34, and a relatively low electrical potential 36 supplied to a second electrode 38.

The fibre 30 is formed from a solid-state electrolyte 40 which in this example comprises a polyethylene oxide/polyethylene glycol (PEO-PEG) system incorporating a salt in the form of, for example, lithium perchlorate.

When an electrical potential difference is applied across the first and second electrodes 34, 38 it is believed that a motion is induced in the cations 42 and anions 44 present in the PEO-PEG system due to the presence of the salt. The PEO-PEG system is in the form of a matrix, and as the cations 42 have an adhesive interaction with the matrix, the cation transport produces a pressure gradient in the fibre 30 which causes a bending of the fibre 30 as can be seen from Figure 3.

By means of the present invention therefore the length of a dry fibre can be controlled in a reproducible way by varying an electric field applied across a first and second electrode forming part of the fibre.

A fibre or filament according to the present invention may be used in connection with wearable electronics, textile electronics, robotic and artificial muscles.

## Claims

1. A fibre (2) or filament comprising: a solid-state electrolyte; and first (4) and second (6) electrodes spaced apart from one another.

2. A fibre (2) or filament according to Claim 1, wherein the fibre or filament is substantially cylindrical and comprises an axis extending longitudinally along the fibre.

3. A fibre (2) or filament according to Claim 1 or Claim 2, wherein the solid-state electrolyte comprise a solvent-free solid-state electrolyte.

4. A fibre (2) or filament according to any one of the preceding claims, wherein the solid-state electrolyte comprises a polyethylene oxide/polyethylene glycol system.

5. A fibre (2) or filament according to Claim 1 wherein the solid-state electrolyte comprises a casted solution of linear polyethylene oxide, a plasticizer in the form of polyethylene glycol, and a salt in the form of lithium perchlorate.

6. A fibre (2) or filament according to any one of the preceding claims, further comprising voltage means for applying an electrical potential difference between the first (4) and second (6) electrodes.

7. A fibre (2) or filament according to Claim 6, wherein the voltage means comprises first voltage source for applying a relatively high electrical potential to the first electrode (4), and a second voltage source for applying a relatively low electrical potential to the second electrode (6).

8. A fibre (2) or filament according to any one of the preceding claims, wherein each of the first (4) and second (6) electrodes extend substantially longitudinally along the fibre.

9. A fibre (2) or filament according to any one of Claims 2 to 8, wherein the first electrode (4) extends substantially along the axis of the fibre.

10. A fibre (10) or filament according to any one of Claims 1 to 8, wherein the first electrode (12) extends along, or close to an outer surface of the fibre or filament.

11. A fibre (10) or filament according to Claim 2 or any claim dependent thereon, wherein the first electrode (12) is spaced apart from the axis of the fibre.

12. A fibre (10) or filament according to Claim 10 or Claim 11, wherein the first electrode (12) extends substantially helically along, or close to the outer surface (16) of the fibre or filament.

13. A fibre (2) or filament according to any one of the preceding claims, wherein the second electrode (6) extends along, or close to an outer surface (8) of the fibre or filament.

14. A fibre (2) or filament according to Claim 2 or any claim dependent thereon, wherein the second electrode (6) is spaced apart from the axis of the fibre.

15. A fibre (2) or filament according to Claim 13 or Claim 14, wherein the second electrode (6) extends substantially helically along, or close to the outer surface of the fibre.

16. A method of causing changes in a dimension of a fibre (2) or filament, the fibre or filament comprising a solid state electrolyte, and further comprising first (4) and second (6) electrodes spaced apart from one another and extending substantially longitudinally along the fibre, the method comprising:
applying an electrical potential difference between the first and second electrodes.

17. A method according to Claim 16, wherein the step of applying an electrical potential difference between the first (4) and second (6) electrodes comprises applying a relatively high electrical potential to the first electrode, and a relatively low electrical potential to the second electrode.

18. A garment formed from a plurality of fibres (2) or filaments as claimed in any one of Claims 1 to 15.

19. A textile formed from a plurality of fibres (2) or filaments as claimed in any one of Claims 1 to 15.

## Patentansprüche

1. Faser (2) oder Faden mit: einem Festkörperelektrolyten und einer ersten (4) und zweiten (6) Elektrode, die auf Abstand voneinander liegen.

2. Faser (2) oder Faden nach Anspruch 1, wobei die Faser (2) oder der Faden im Wesentlichen zylindrisch ist und eine Achse umfasst, die in Längsrichtung entlang der Faser verläuft.

3. Faser (2) oder Faden nach Anspruch 1 oder Anspruch 2, wobei der Festkörperelektrolyt einen lösungsmittelfreien Festkörperelektrolyten umfasst.

4. Faser (2) oder Faden nach einem der vorhergehenden Ansprüche, wobei der Festkörperelektrolyt ein Polyethylenoxid/Polyethylenglykol-System umfasst.

5. Faser (2) oder Faden nach Anspruch 1, wobei der Festkörperelektrolyt eine gegossene Lösung von linearem Polyethylenoxid, einen Weichmacher in Form von Polyethylenglykol und ein Salz in Form von Lithiumperchlorat umfasst.

6. Faser (2) oder Faden nach einem der vorhergehenden Ansprüche, weiterhin mit Spannungsmitteln zum Anlegen einer elektrischen Potentialdifferenz zwischen der ersten (4) und zweiten (6) Elektrode.

7. Faser (2) oder Faden nach Anspruch 6, wobei die Spannungsmittel eine erste Spannungsquelle zum Anlegen eines relativ hohen elektrischen Potentials an die erste Elektrode (4) und eine zweite Spannungsquelle zum Anlegen eines relativ niedrigen elektrischen Potentials an die zweite Elektrode (6) umfassen.

8. Faser (2) oder Faden nach einem der vorhergehenden Ansprüche, wobei jede der ersten (4) und zweiten (6) Elektrode im Wesentlichen in Längsrichtung entlang der Faser verläuft.

9. Faser (2) oder Faden nach einem der Ansprüche 2 bis 8, wobei die erste Elektrode (4) im Wesentlichen entlang der Achse der Faser verläuft.

10. Faser (10) oder Faden nach einem der Ansprüche 1 bis 8, wobei die erste Elektrode (12) entlang oder nahe einer Außenfläche der Faser oder des Fadens verläuft.

11. Faser (10) oder Faden nach Anspruch 2 oder einem davon abhängigen Anspruch, wobei die erste Elektrode (12) auf Abstand zur Achse der Faser liegt.

12. Faser (10) oder Faden nach Anspruch 10 oder Anspruch 11, wobei die erste Elektrode (12) im Wesentlichen gewendelt entlang oder nahe der Außenfläche (16) der Faser oder des Fadens verläuft.

13. Faser (2) oder Faden nach einem der vorhergehenden Ansprüche, wobei die zweite Elektrode (6) entlang oder nahe einer Außenfläche (8) der Faser oder des Fadens verläuft.

14. Faser (2) oder Faden nach Anspruch 2 oder einem davon abhängigen Anspruch, wobei die zweite Elektrode (6) auf Abstand zur Achse der Faser liegt.

15. Faser (2) oder Faden nach Anspruch 13 oder Anspruch 14, wobei die zweite Elektrode (6) im Wesentlichen gewendelt entlang oder nahe der Außenfläche der Faser verläuft.

16. Verfahren zum Bewirken von Änderungen in einer Abmessung einer Faser (2) oder eines Fadens, wobei die Faser oder der Faden einen Festkörperelektrolyten und weiterhin eine erste (4) und eine zweite (6) Elektrode umfasst, die auf Abstand voneinander liegen und im Wesentlichen in Längsrichtung entlang der Faser verlaufen, welches Verfahren Folgendes umfasst:
Anlegen einer elektrischen Potentialdifferenz zwischen der ersten und zweiten Elektrode.

17. Verfahren nach Anspruch 16, wobei der Schritt des Anlegens einer elektrischen Potentialdifferenz zwischen der ersten (4) und zweiten (6) Elektrode das Anlegen eines relativ hohen elektrischen Potentials an die erste Elektrode und eines relativ niedrigen elektrischen Potentials an die zweite Elektrode umfasst.

18. Kleidungsstück, gebildet aus einer Vielzahl von Fasern (2) oder Fäden nach einem der Ansprüche 1 bis 15.

19. Gewebe, gebildet aus einer Vielzahl von Fasern (2) oder Fäden nach einem der Ansprüche 1 bis 15.

## Revendications

1. Fibre (2) ou filament comprenant : un électrolyte d'état solide ; et des première (4) et deuxième (6) électrodes espacées l'une de l'autre.

2. Fibre (2) ou filament selon la revendication 1, dans lequel la fibre ou le filament est sensiblement cylindrique et comprend un axe s'étendant longitudinalement le long de la fibre.

3. Fibre (2) ou filament selon la revendication 1 ou la revendication 2, dans lequel l'électrolyte d'état solide comprend un électrolyte d'état solide sans solvant.

4. Fibre (2) ou filament selon l'une quelconque des revendications précédentes, dans lequel l'électrolyte d'état solide comprend un système d'oxyde de polyéthylène/glycol de polyéthylène.

5. Fibre (2) ou filament selon la revendication 1, dans lequel l'électrolyte d'état solide comprend une solution coulée d'oxyde de polyéthylène linéaire, un plastifiant sous la forme de glycol de polyéthylène, et un sel sous la forme de perchlorate de lithium.

6. Fibre (2) ou filament selon l'une quelconque des revendications précédentes, comprenant en outre des moyens de tension pour appliquer une différence de potentiel électrique entre les première (4) et deuxième (6) électrodes.

7. Fibre (2) ou filament selon la revendication 7, dans lequel les moyens de tension comprennent une première source de tension pour appliquer un potentiel électrique relativement grand à la première électrode (4), et une deuxième source de tension pour appliquer un potentiel électrique relativement petit à la deuxième électrode (6).

8. Fibre (2) ou filament selon l'une quelconque des revendications précédentes, dans lequel chacune des première (4) et deuxième (6) électrodes s'étend sensiblement longitudinalement le long de la fibre.

9. Fibre (2) ou filament selon l'une quelconque des revendications 2 à 8, dans lequel la première électrode (4) s'étend sensiblement le long de l'axe de la fibre.

10. Fibre (10) ou filament selon l'une quelconque des revendications 1 à 8, dans lequel la première électrode (12) s'étend le long ou à proximité d'une surface extérieure de la fibre ou du filament.

11. Fibre (10) ou filament selon la revendication 2 ou l'une quelconque des revendications dépendantes de celle-ci, dans lequel la première électrode (12) est espacée de l'axe de la fibre.

12. Fibre (10) ou filament selon la revendication 10 ou la revendication 11, dans lequel la première électrode (12) s'étend sensiblement hélicoïdalement le long ou à proximité de la surface extérieure (16) de la fibre ou du filament.

13. Fibre (2) ou filament selon l'une quelconque des revendications précédentes, dans lequel la deuxième électrode (6) s'étend le long ou à proximité d'une surface extérieure (8) de la fibre ou du filament.

14. Fibre (2) ou filament selon la revendication 2 ou l'une quelconque des revendications dépendantes de celle-ci, dans lequel la deuxième électrode (6) est espacée de l'axe de la fibre.

15. Fibre (2) ou filament selon la revendication 13 ou la revendication 14, dans lequel la deuxième électrode (12) s'étend sensiblement hélicoïdalement le long ou à proximité de la surface extérieure de la fibre.

16. Procédé destiné à provoquer des changements dans une dimension d'une fibre (2) ou d'un filament, la fibre ou le filament comprenant un électrolyte d'état solide, et comprenant en outre des première (4) et deuxième (6) électrodes espacées l'une de l'autre et s'étendant sensiblement longitudinalement le long de la fibre, le procédé comprenant l'étape consistant à :
appliquer une différence de potentiel électrique entre les première et deuxième électrodes.

17. Procédé selon la revendication 16, dans lequel l'étape consistant à appliquer une différence de potentiel électrique entre les première (4) et deuxième (6) électrodes comprend l'étape consistant à appliquer un potentiel électrique relativement grand à la première électrode, et un potentiel électrique relativement petit à la deuxième électrode.

18. Vêtement formé à partir d'une pluralité de fibres (2) ou de filaments selon l'une quelconque des revendications 1 à 15.

19. Textile formé à partir d'une pluralité de fibres (2) ou de filaments selon l'une quelconque des revendications 1 à 15.
